# EUROPEAN PATENT APPLICATION

(11) **EP 2 698 955 A1**
(43) Date of publication of application: **19.02.2014**
(21) Application number: 12180317.5
(22) Date of filing: 13.08.2012
(51) Int. Cl.: H04L 12/58

(54) **Method and system for sending an alert message to a user**

(71) Applicant: Wildfire Pte Ltd, Singapore 059818 (SG)
(72) Inventor: Zrenner, Christoph, 72076 Tübingen (DE); Duvall, Benjamin, Sudbury, MA Massachusetts 01776 (US); Liu, Kai, 200040 Pudong (CN)
(74) Representative: Rupprecht, Kay

(57) **Abstract**

The present invention relates to a method for sending an alert message (62) to a user (60) concerning a post (30) provided by a content provider (10), in particular a social media content provider, comprising:
(i) storing a plurality of rules (70), a plurality of user IDs (72) and an association (74) between user IDs and rules in a database (29),
(ii) a post obtaining unit (20) obtaining at least one post (30) from the content provider (10),
(iii) a determining unit (24) determining at least one matching rule (70) from the plurality of rules, the matching rule matching the post (30),
(iv) an assigning unit (26) determining at least one target user ID (72) from those user IDs that are associated with the matching rule (70),
(v) a message sending unit (52) sending the alert message (62) comprising information about the post (30) to an address associated with the target user ID,
(vi) a message receiving unit (54) waiting for a reaction message (64) associated with the alert message (62), and
(vii) a processing unit (56) processing and/or forwarding the reaction message (64).

## Description

### FIELD OF THE INVENTION

The present invention relates to a system and method for sending an alert message to a user. The invention also relates to a computer program for implementing said method and to a computer readable storage medium comprising instructions that, when executed, cause a computer to perform said method.

### BACKGROUND OF THE INVENTION

Search engines have become indispensable tools for dealing with the enormous amount of information that is available on the Internet. Improvements in the past decade have been directed to tremendous increases in the computing power and to advances in the user interface. Structurally, however, the engines of Google, Bing and others are still targeted to content that is provided for passive viewing as is typical for the traditional use of the World Wide Web.

With the arrival of what is called the "social web" or the "web 2.0", users are no longer limited to the passive consumption of content that is provided for them, but they become active creators of online information by contributing their own user generated content: Enabled by social media, a new global conversation has started. However, this new global marketplace, the virtual space where the online conversations take place (hosted by content providers), due to its sheer size, suffers from a critical inefficiency in the matching between people and conversations. There are so many conversations (e.g., pluralities of posts submitted by different users) happening simultaneously that Internet users are not able to identify the most relevant ones for them to consume and participate in - they are simply not aware of them.

Furthermore, even if a user becomes aware of an ongoing discussion that is relevant to him or her, there are still technical hurdles before he or she can join the conversation. For example, many discussions are hosted by social media content providers that require participants to download and install an application or browse to their site, they require registration, authentication or passing of captcha systems before allowing a user to contribute to a conversation.

A further problem is the low quality of many posts hosted by social media content providers. Since there is no review process, everybody can submit posts and thus make them publicly available, often anonymously, and this leads to two problems: Firstly, a large proportion of posts are of low relevance to the general public. Secondly, an increasing proportion of social media posts are published for commercial purposes, a kind of "spam 2.0", they are either unwanted (product advertisements) or they are misleading (fake reviews).

One approach to deal with the above problems is to filter information by restricting it to sources from within the social graph. Social networks actively present opportunities for conversations between users, but the scope is limited to the hundreds of confirmed connections of a particular user; these feeds are about relevant people, not about relevant content. In effect, this is a solution that "localizes" the global conversation into relationship groups, it does not solve the core inefficiency of inefficient matching of people with conversations in general. In particular, the inefficiency leads to unnecessary data traffic on the Internet and to unavoidable delays. Furthermore, users need to be registered in authorization databases of different content providers, which leads to an unnecessary duplication of data. These different user databases are stored in different locations and in different data formats. Thus, no synchronization occurs or is even automatically feasible.

In view of the above-mentioned problems, it is an object of the present invention to provide a system and method for allowing a user to react to posts that are provided by a content provider, wherein the system and method overcome some or all of the above-mentioned problems.

### SUMMARY OF THE INVENTION

According to a first aspect of the present invention, there is provided a method for sending an alert message to a user concerning a post provided by a content provider, in particular a social media content provider, comprising:
(i) storing a plurality of rules, a plurality of user IDs and an association between user IDs and rules in a database,
(ii) a post obtaining unit obtaining at least one post from the content provider,
(iii) a determining unit determining at least one matching rule from the plurality of rules, the matching rule matching the post,
(iv) an assigning unit determining at least one target user ID from those user IDs that are associated with the matching rule,
(v) a message sending unit sending the alert message comprising information about the post to an address associated with the target user ID,
(vi) a message receiving unit receiving a reaction message corresponding to the alert message, and
(vii) a processing unit processing and/or forwarding the reaction message.

According to another aspect of the present invention, there is provided a system for sending a message to a user concerning a post provided by a content provider, in particular a social media content provider, comprising:
- a database for storing a plurality of rules, a plurality of user IDs and an association between user IDs and rules,
- a post obtaining unit for requesting a post from the content provider,
- a determining unit for determining whether the post matches one of the plurality of rules,
- an assigning unit for determining a target user ID from those user IDs that are associated with the matching rule,
- a message sending unit for sending an alert message concerning the post to an address associated with the target user ID,
- a message receiving unit for receiving a reaction message corresponding to the alert message,
- a processing unit for processing and/or forwarding the reaction message.

According to another aspect of the present invention, there is provided a computer program comprising program code means for causing a computer to carry out the steps of the method as claimed in claim 1 when said computer program is carried out on the computer.

According to yet another aspect of the present invention, there is provided a computer readable storage medium comprising instructions that, when executed by a processor, cause a computer to carry out the steps of the above method and the methods as described in the following.

Preferred embodiments of the invention are defined in the dependent claims. It shall be understood that the claimed system and computer program have similar and/or identical preferred embodiments as the claimed method and as defined in the dependent claims.

The alert message and reaction message can be transmitted with any kind of messaging system, implemented by any type of electronic communication device or system, including but not limited to traditional email, instant messaging (e.g. Skype, msn Messager, or gTalk or other web-based chat systems), sms, mobile phone or tablet applications, flags on social media / internet websites (e.g. Facebook or Linkedin), microblogs, etc.

Furthermore, the alert message may be a message that is displayed on a website feed serving as a user interface or presentation layer. For example, it could be a website feed that is provided for a user and that this user can access via an authentication method.

A post can be any type of user generated content provided by a content provider, e.g. on the internet, including but not limited to text, image, video, audio and other media on bulletin boards, blogs, microblogs (e.g. Twitter) any kind of discussion forum, social network platforms (e.g. Facebook or Linkedin), e-commerce sites (eBay, Amazon, etc.), review sites, news sites, etc. whether available to the public at large or a restricted set of users (i.e. members, friends, groups, etc.).

In a preferred embodiment of the invention, the posts are user-generated posts, on a social media platform.

A post may be part of a 'social media thread', 'thread' or 'conversation' i.e. a collection of related social media contributions, such as for example an initial social media post and a series of comment posts, a series of posts on a bulletin board system, an exchange of posts on a social media network, a series of related microblog posts, reviews of or comments on a product or service, comments on a news article, comments on a video, etc.

The obtaining of the post from the content provider can be done by any type of access (such as through HTTP requests to a website or application, through an API interface, through polling of a database, processing streamed data etc.) and may require authentication. The access to posts of a content provider can also be via queries in the form of keyword searches (in bulleting boards, on social networks, on microblogs, on news sites, on video sites, in social media and general web search engines, on e-commerce and review sites). Posts can be obtained directly from the content provider or indirectly through a third-party post aggregation system.

The data obtained and processed further below may include additional available content provider specific metadata relating to the post or thread such as geographical location, location in a hierarchically organized bulletin board system, tags, number of views, number of likes, wants, up-votes, down-votes, etc., contributor rank or reputation, type and price of product (in the case of an e-commerce site), type and length of video (in the case of a video site) etc., as well as any additional augmentations (shortened URL expansion, third-party influence score look-up, sentiment analysis, etc.) that may be added to the post.

The rules that are used by the determining unit to determine a rule that matches a specific post may be rules with a direct binary outcome, e.g. a rule that specifies whether or not a certain keyword is present in a post. Alternatively, a rule may include a number of soft criteria that assign scores to the post and whereby the rule is fulfilled if the sum of the assigned scores is more than a certain threshold. The rules can be based on certain features that are extracted from posts. For example, one such feature could be a scalar value that corresponds to the percentage of critical/negative words in a post.

The assigning of a target user ID from those user IDs that are associated with the matching rule may simply be a random choice. Alternatively, the assigning may also be based on additional user-based rules that may also be stored in the database. For example, these rules may include factors such as the reputation of that user on the content provider from which the post originated, whether that user is currently online or when the user was last online, the interval since the last time the user has received an alert message, whether and when the system last received a reaction message from that user, what proportion of alert messages sent with regard to similar posts have resulted in a reaction message, what the content of the latest reaction message was, etc. and they may be evaluated by a point based system or a machine learning algorithm using the historical record of alert messages and reaction messages as training data.

The assigning of a post to one of the plurality of user IDs may be seen as a kind of "matching" between discussions and users.

As outlined above, message sending and message receiving can be done with any type of electronic communication device or system.

The message sending can result in the new message content being shown either directly inside an email, SMS, or instant message application or in a presentation layer such as a website feed or through a local application either stand-alone or a plug-in application inside an instant messaging application or browser on the user's computer. In a preferred embodiment, the alert message will comprise some information about the post directly and also comprise a link for the user to optionally go to a website feed as a user interface, displaying the posts to which the user has been alerted and other relevant information such as the responses from other users and information relating to the rules that were matched.

The waiting for a reaction message could be done by listening to an instant message application, polling an e-mail inbox, keeping a port open for incoming communication or waiting for a signal that indicates a reaction message.

According to another aspect of the invention, the alert messages are sent to a web browser of the user.

For example, the alert message may be a displayed as a website feed in the user's browser. In this context, the address associated with the target user ID could be the IP address of a user who has logged in to the website using a login that is associated with the target user ID. This has the advantage that the user can choose when he views the alert messages and that the alert messages do not disturb the user. Furthermore, the website that is being displayed in the user's browser may provider further information about the relevant posts.

The alert message could be contained in an HTML page that is sent to the browser of a user as a response to an http request from this user. For example, a system according to the present invention could provide a website that the users can log in to (e.g. using the user ID that is stored in the database) and receive alert messages about posts relevant to their interests. In other words, the alert message could be sent to the user via a website feed that is provided for a user and that this user can access via an authentication method. In this context, the alert messages can be provided following a request from the user. In other embodiments of the invention, the webpage could be updated automatically with new alert messages while the user is viewing the webpage in a browser.

The above-described ways of sending alert messages may preferentially be combined, e.g. by sending alert messages to the browser of the user when the user logs in to an account on a website that is provided for users and by additionally sending alert messages via email or instant message.

In a preferred embodiment, the alert messages are automatically sent via email only if the user has not logged into the website feed and has not received alert messages via the website for a predetermined amount of time, e.g. for more than a day or several days. In this way, it is ensured that the user does not receive too many alert messages via email, but still can see all alert messages when he wants to.

Processing and/or forwarding the reaction message may include a simple reformatting of the message. It may also include adding information from the database. For example, the reaction message of the user might comprise text that the user desires to be submitted as a reaction post. In that case, this text and corresponding information about the user could be submitted to the content provider and this would represent a forwarding of the reaction message. The reaction message may also be forwarded to a third party.

There is a scenario, where the reaction message is not transmitted directly, but through the content provider from where the post referred to in the alert message originated: If a user receives an alert message, and then submits a reaction post by directly accessing the content provider, then this reaction post can be considered to also implicitly represent the reaction message. A monitoring unit can monitor conversations to which users have been alerted in order to determine whether any reaction posts have been posted directly, so that they can be treated as implicit reaction messages.

According to the present invention, the user is thus automatically notified of one or more posts that match one of the plurality of rules. In one embodiment, the rules correspond to the interests of the user. Therefore, the user can be automatically notified of posts that are relevant to his interests. Furthermore, the system waits for a reaction message from the user. The method and system of the present invention thus act as a gateway between the user and a content provider. This has the advantage that the user only receives messages from the system of the present invention and only sends messages to this system. The user thus only has to interface with one system, which can provide a convenient and easy to use user interface. The gateway can centrally store relevant data (e.g. the relevant posts), which avoids unnecessary duplication of the data and which reduces the overall data traffic.

The system and method of the present invention thus makes it possible that via the post obtaining unit the system can obtain posts from many content providers and via assigning and message sending unit a plurality of users can be notified of the posts that are relevant for them. This has the advantage that less traffic and overall computation time are necessary to determine the relevant posts for a large number of users. As another advantage, the system makes it possible that users are notified of relevant posts with a minimum delay time. Yet another advantage of the system is that a plurality of posts can be obtained from one system - if authentication or computational efforts are necessary for the post obtaining, this needs to be implemented only on one system.

According to another aspect of the present invention, the steps (i) to (v) of the method are carried out continuously, if new posts are acquired from a stream of incoming data, or repeatedly, if new posts are acquired from polling a content provider, in particular in intervals of less than 10 minutes, preferably in intervals which depend on a view frequency of the content provider or an update frequency of the content provider, in particular in intervals which depend on a channel view frequency of a content channel of the content provider or a channel update frequency of a channel of the content provider.

A channel yields a stream of new posts from one or more content providers. For example, in the case that access is via http directly to a website of a content provider that is a bulletin board system with hierarchically organized subsections, the channel would correspond to new posts corresponding to a particular subsection. Or as a second example, in the case that access is via an API of a social media aggregator the channel would correspond to new posts satisfying a query rule including keywords or other metadata.

If there is an explicit grouping of posts relating to some topic (such as comments following the first post of a thread in a BBS system, comments about a video or news article, reviews about a product on an e-commerce site, etc.) the system can group posts into threads. If there is no explicit grouping, (such as in the case of microblogs), the system may assign a grouping of posts into threads according to their temporal relationship and similarities in content (e.g. presence of hashtags).

The system can be designed to minimize the latency between a post being posted and being acquired. This has the advantage that the user can be notified of relevant posts in near real-time. This makes it possible for example that the user can respond to the posts before other users have responded. An interval time that is adapted to the update frequency of the content provider has the further advantage that the resources of the system can be used more efficiently.

In other embodiments according to the present invention, in the case that new posts are acquired by repeatedly accessing a content provider, the polling interval time can be dynamically adjusted to be lower on channels and during periods that yield (a) rapidly evolving conversation threads, (b) a high proportion of new conversation threads, and (c) a high proportion of conversation threads that match a rule, and similar relevance metrics. On channels that do not yield many new or relevant posts, or during quiet periods, the polling interval will increase. The polling interval thus can depend on the expected future activity, which is determined from the historical activity, both in the immediate past, and also over longer periods to take into account cyclical activity throughout the day or week. A dynamically adjusted polling interval can have the advantage to minimize the computing and data transfer cost per relevant new or evolving conversation.

According to another aspect of the present invention, processing and/or forwarding the reaction message comprises submitting a reaction post with the content of the reaction message to the content provider, in particular after an authentication procedure using authentication information that are stored in the database associated with the user ID. Depending on the content provider, the user may also authorize the system to submit posts on his or her behalf (for example to a microblog platform or social networking site) without submitting their username and password.

This has the advantage that the system operates as a gateway to the content provider. The user does not need to perform the authentication procedure with the content provider itself. Instead, the system authenticates for the user. The system may comprise a central database of authorization information for different content providers. This avoids an unnecessary duplication of authorization information, thus reducing overall storage space and providing a possibility for simplified updates to the authorization information.

In one embodiment, the database stores authentication information for the user for different content providers. The authentication information may comprise a username and a password for the user. In other embodiments, the authentication information that is used to submit the content of a reaction message of a user as a new post may be used for several users. For example, the same user name and password may be provided to the content provider for the posts that are submitted from different users. This has the advantage that users that do not have an account at a given content provider, do not need to sign-up individually. Only one set of authentication information is necessary for submitting the reaction posts of several users.

In other embodiments, the authentication information are not stored in a database of the system, but instead the user either includes the authentication information with his reaction message (for example, in a web browser or local application interface), or uses an existing valid authentication (active sessions) typically when submitted through a web browser (directly, or through a plug-in), or uses locally stored authentication information (e.g., in browser cookies or the operating system keychain). This has the advantage that the system does not need to store the authentication information, which the user may want to keep private to himself.

According to another aspect of the present invention, the method further comprises a step of a monitoring unit monitoring the content provider for new posts associated with the post and a step of a measuring unit measuring the quality of the reaction message, in particular using a measure that is based on new posts, preferably based on new posts that have been submitted in response to the reaction post.

Monitoring the content provider for new posts that are associated with the first post that the user was notified of has the advantage that the system can for example provide the user with information about the progress of an ongoing online discussion. This avoids unnecessary searching of the user for the additional information, thus reducing overall data traffic. Furthermore, the system allows for immediate updates of the user, thus allowing a near real-time exchange of posts. In some embodiments, it can be provided that those users that have been notified of the first post are also automatically notified of new posts related to the first post.

Measuring the quality of the reaction message has the advantage that subsequent posts corresponding to the same rule can be assigned to a different user if it has been determined that the reaction message of the previous user was of a low quality. Thus, the system can ensure that users get alerted of posts where they can provide high-quality reaction messages.

Measuring the quality of the reaction message can be done using measures that are directly based on the content of the reaction message. For example, the length of the reaction message and the presence of certain keywords can be an indicator of the quality. Furthermore, grammar and spelling checks could be used to determine whether the content of the reaction message is of a high standard.

In other embodiments, the quality of the reaction message is not only determined based on the content of the reaction message itself, but based on the impact that the reaction message had on the evolving conversation, in terms of the number and content of new posts that have been submitted in response to the reaction post. For example, the presence of certain keywords can be used to determine whether the users who submitted the subsequent posts are in agreement or disagreement with the reaction post. It is also conceivable that based on the presence of certain keywords it is determined whether the reaction post has changed the topic of the posts. In other words, if the same first group of keywords appeared in posts that have been submitted before the reaction post and if the reaction post comprises a new keyword that also appears in the new posts that have been submitted in response to the reaction post, it can be deducted that the reaction post had an influence on the discussion. This can be used to assign a high-quality to the reaction post and the reaction message that it is based on.

In some embodiments, machine learning techniques may be used to determine the quality of reaction messages. For example, manual labelling might be used to assign high-quality to certain reaction messages. Machine learning methods would then assign high-quality to new reaction messages that share properties with reaction messages that have been manually labelled as high-quality.

In one embodiment, the rule comprises a criterion for determining whether a post matches the rule and a desired post content. In this case, the quality of the reaction message is determined based on whether new posts in response to the reaction post are similar to the desired post content.

Different kinds of similarity measures can be used, e. g. based only on keyword similarity. For example, the criterion could be the presence of a brand name in a post. The desired new post text could be an appraisal of the brand.

It should be noted that quality in this context is not necessarily to be understood as an objective measure, but can depend on the subjective requirements of an entity using this method or system for their purposes. For example, if the Manchester United football club were to use this method to send alert messages to their fans pointing out posts discussing a recent match against Manchester City, they would have their own subjective view of what content comprises a high quality reaction message and reaction post.

According to another aspect of the present invention, step (iv) of the method is based on a machine learning algorithm which is trained with measured qualities of previous reaction messages associated with the target user ID. This has the advantage that the method can fully automatically determine an optimum matching of posts and users.

In other embodiments, the method of the present invention can further comprise a feature extracting step. This can involve annotating posts based on a semantic analysis ontology ("knowledge tree") and assigning of features based on the content, the semantic annotations and metadata such as the following:
(a) frequency of keywords and n-grams,
(b) number and rate of change of views and comments,
(c) content provider-type dependent metadata (product, price, rating, likes, caption, tags, etc.),
(d) presence of embedded non-textual content (images, sounds, videos), and
(e) user data (identity, reputation, prolifience, etc.).

The extraction of some of the features described above may require additional information/datasets separate from the post, such as semantic ontologies or knowledge trees (e.g. "London is a city in the United Kingdom"), the list price of a product (to make a comparison in order to determine whether a post pertains to a product that is unusually expensive or cheap), information on the user's identity and previous posts or reputation from third party sites, content from URLs that the content of the post refers to, etc.

According to another aspect of the present invention, the processing unit comprises an operator interface which is adapted to display the reaction message to a human operator and which is adapted to allow the human operator to discard and/or modify the reaction message, or to perform some other action as part of processing the reaction message. The operator may also manually assign a quality score to the message.

The human operator who reviews the reaction messages can for example intervene if the reaction messages comprise insulting or offensive comments or if they are clearly not a valuable contribution to the previous posts. The operator interface could be implemented as a program on a computer or it could be a website displaying the reaction posts and providing options to discard, edit or forward the reaction messages. This embodiment, which allows an operator to review the alert messages before posting them for example to a social media content provider, is particularly valuable if the authorisation to this social media provider is based not on the user ID of the user who is writing the reaction message, but if for example it is based on authorisation information of the human operator or the company of the operator.

Alternatively, users could be employees of the company and the human operator could be the supervisor. The employees would draft reaction messages and the supervisor would review and approve them before their submission to a content provider.

In other scenarios, the reaction messages would not be forwarded to a content provider, but could be forwarded to another entity. For example, the reaction messages could be forwarded as e-mails to a customer who wants to be informed of the users' comments on posts provided by a different content provider.

According to another aspect of the present invention, the database, the post obtaining unit, the determining unit and the assigning unit are provided on a first server, and the message sending unit, the message receiving unit and the processing unit are provided on a second server; wherein the first server further comprises a remote control unit adapted to control the message sending unit, the message receiving unit and the processing unit of the second server.

The first and the second server can each comprise several computers which are bundled together as a cluster. In a typical configuration, there would be one centralized first that communicates with a number of second distributed among various entities managing the interaction with their users.

Distributing the units of the system on two servers has the advantage that the system is implemented in a modular and scalable way. First and second server could be located at different physical locations. This has the advantage that administration of the system can be done by different administrators depending on whether it concerns the obtaining and assigning of posts or whether it concerns the processing and forwarding of the reaction messages. For example, a large datacentre could be suitable for polling in real-time a large number of content providers. This would require large capacity in computing power and network connectivity, however, it might require little or no human interaction. On the other hand, processing of the reaction messages might involve less computing power and network connectivity, but might require humans reading the reaction messages and deciding whether to discard, modify or forward the reaction messages. Furthermore, decentralizing the communication with users and the processing of reaction messages allows different sets of users and their access credentials or authorizations to be managed on different servers and locations, which allows responsibility for user credential security to be encapsulated.

According to another aspect of the present invention, the second server further comprises an authorization request unit for requesting authorization from a user before sending the alert message to the user.

Requesting authorisation from a user before sending messages to this user leads to an improved security of the system. It can also have the advantage that it is ensured that this user actually wants to be notified of relevant posts. It thus ensures higher acceptance of the system. If the alert messages are sent over a social network such as Facebook or an instant messaging application, the authorisation request could be implemented as a so-called friend request, a contact adding request or application access authorization request. If, on the other hand, the alert messages are sent via e-mail, the authorisation request could be an e-mail that asks the user to respond to that e-mail or to click on a confirmation link included in that e-mail.

According to another aspect of the present invention the system further comprises a user interface which is adapted to display information to the user, receive input from the user, receive the alert message and to send the reaction message and wherein the message sending unit sends the alert message to an address associated with the user ID and the user interface.

Providing a user interface that is specific to the present system has the further advantage that additional information related to the post can be presented to the user in a convenient manner. Furthermore, the user interface can display the post and information and provide a text input field adapted for the convenience of the user.

The user interface may also show related posts in addition to the alerted posts. If the user clicks on a related post (to expand it and show more details) this serves as training data with regard to relevance of posts like this one. The presentation layer also enables the user to send a reaction message, such as a reply to a post. If a user then replies to such post, this is even stronger training data. The user does not have to act on the alerted post at all, in which case this serves as negative training data. Even if the user has received no specific alerts, the presentation layer is designed to show sub-alert-threshold posts ranked by estimated relevance.

A user interface is not required in the implementation of this method or system, since relevant information can be included in the alert message and the user can go to the content provider from which the post originated for further information. Even if an explicit user interface is available, the user is not necessarily required to transmit the reaction message. An alert message may be transmitted, and the reaction message may subsequently be transmitted directly.

The user interface 61 can be a desktop application that is running on a computer 60' of the user 60. The user interface 61 can communicate with the first and/or second server 80, 82 for example via http or via an API.

According to another aspect of the present invention the user interface is a browser plugin that is operable within a browser of a computer of the user.

Operating the user interface as a browser plug-in enables augmented browsing based on the content of the web site: The plug-in can communicate with the server with information about the currently open website and can receive relevant alert messages. It can then modify the currently browsed website by adding posts that alert messages refer to. For example, if a user is considering purchase of a product on an e-commerce site, the browser plug-in could display posts reviewing that product from other sources. The user can also send a reaction message through using the browser plug-in. In this embodiment, reaction messages could be up-votes or down-votes on the posts that were displayed and thus serve as training data.

As an extension to the system and method herein described, in addition to adding posts from other sources, the browser plug-in could also modify the page so as to annotate posts on that page with further information and make an estimation of the relevance of that post to the user. The browser plug-in could hide posts that are estimated to be advertising or to be of low relevance to the user. In this embodiment, the browser plug-in would act as a spam filter for social media "spam 2.0". It is a collaborative filter in the sense that it uses up-votes or down-votes from other users to determine whether or not to display a post.

Providing the user interface as a browser plugin has the further advantage that the user can operate the user interface within a familiar environment. The browser plugin could be active whenever the user is using his browser and thus potentially available to respond to alert messages. Furthermore, browser plugins can be lightweight applications that are easier to install and maintain than full desktop applications.

These and other aspects of the invention will be apparent from and elucidated with reference to the embodiments described hereinafter.

### BRIEF DESCRIPTION OF THE DRAWINGS

In the following drawings
- Fig. 1 shows a schematic view of a first embodiment of a system according to the present invention,
- Fig. 2 shows a schematic view of a second embodiment of a system according to the present invention,
- Fig. 3 shows a schematic view of rules, user IDs and associations as used in the first and second embodiments, and
- Fig. 4 shows a schematic view of a third embodiment of a system according to the present invention.

### DETAILED DESCRIPTION OF PREFERRED EMBODIMENTS OF THE INVENTION

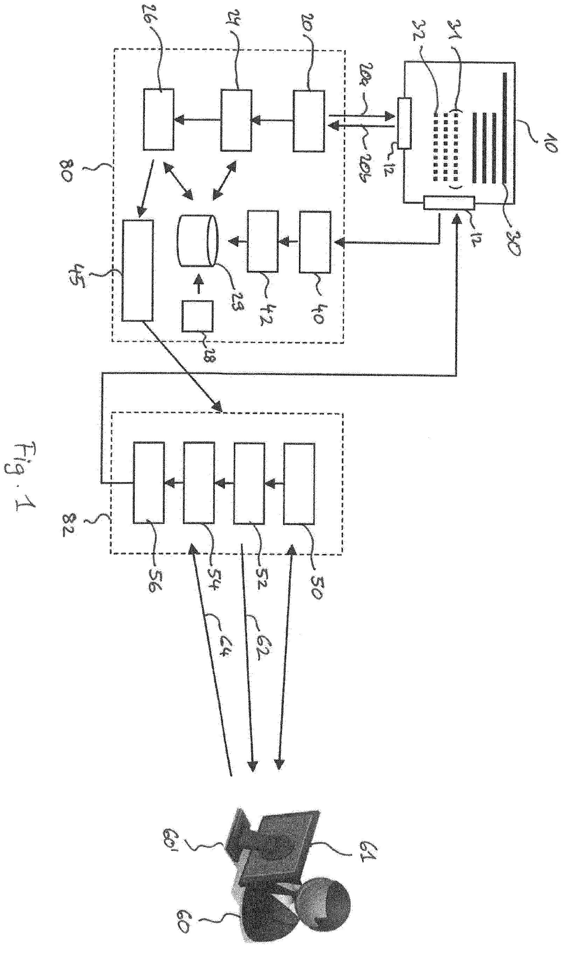

In the system shown in Fig. 1, a post obtaining unit 20, a determining unit 24, assigning unit 26, a storing unit 28, a database 29, a monitoring unit 40, a measuring unit 42 and a remote control unit 45 are located on a first server 80 a message sending unit 52, a message receiving unit 54, and a processing unit 56 are provided on a second server 82.

The post obtaining unit 20 sends a request 20a to an API 12 of a social media content provider 10. The API 12 responds with a dataset 20b which contains information about a post 30. The API might require a login and a password before giving access to the post information. Although not shown in Fig. 1, these informations may be stored in the database 29.

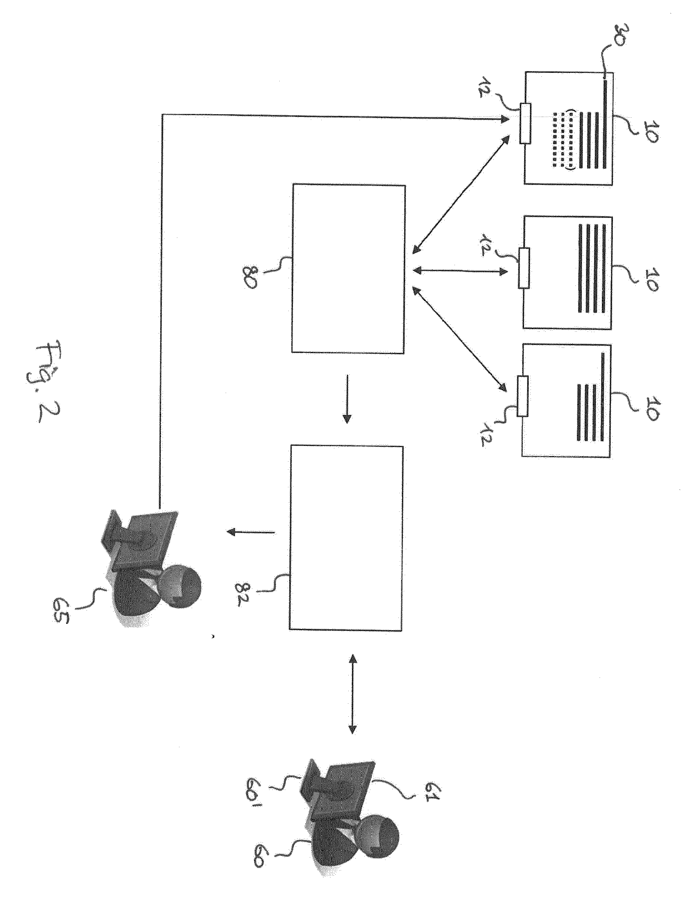

The post obtaining unit 20 retrieves a plurality of posts 30 from the dataset 20b. The determining unit 24 checks the plurality of posts 30 against the plurality of rules that are stored in the database 29. As will be shown in more detail in Fig. 2, these rules 70 might comprise simple checks whether certain keywords are present in the posts. For a certain post, more than one rule may match this post. In that case, the subsequent steps of the method may be carried out for each of the matching rules.

The assigning unit 26 determines a target user ID from those user IDs that are in the database 29 associated with the matching rule. The database 29 may comprise information about the number of reaction messages that have previously been sent by the different users and furthermore it may comprise information about the quality that has been assigned to these reaction messages. Thus, the assigning unit 26 can assign a target user ID where it is assumed that the post is particularly relevant to this user and that he may contribute a reaction message that, if it is submitted to the content provider 10 as a reaction post 31, has an impact on the discussion on the content provider 10.

Although Fig. 1 only shows obtaining posts 30 from one content provider 10, it is to be understood that a system according to the present invention would typically request information from a plurality of different content providers. Access to these content providers could be done using different protocols, wherein the information which protocol to use and which authentication information are necessary could all be stored in the database 29. For example, access to some content providers would be via http without authorisation, whereas other content providers would provide APIs which require authentication.

In the embodiment that is shown in Fig. 1, the units are distributed on two servers 80, 82. Therefore, a remote control unit 45 sends control messages to the second server 82. These control messages could be implemented via remote procedure calls (RPC) or http polling. Based on the instruction that is received from the first server 80, the authorisation request unit 50 sends authorisation request messages to a user 60. Once the user 60 has confirmed the authorisation request, the message sending unit 52 sends an alert message 62 to the user. For example, this could be a notification that is shown to the user in a website which displays a feed of such notifications. The website feed could be hosted by the second server 82, but could alternatively also be hosted by the first server 80. In this case, unlike what is shown in Fig. 1, the alert message would first be sent to the first server 80 and the first server 80 would then display an updated website feed to the user 60.

The alert message 62 may comprise the content of the post 30. Alternatively, it could be a link which refers the user to a website hosted by the content provider 10, which shows the plurality of posts 30.

If the user does not, within a predetermined time, respond to the alert message 62 by sending a reaction message 64, a reminder sending unit (not shown in Fig. 1) of the second server 82 may send a reminder alert message to the user 60.

In some embodiments, the message sending unit 52 may be equipped to enrich the alert message 62 with further information about the post 30 and/or information related to the rule. For example, it may comprise a similar post retrieval unit, which automatically retrieves previous posts, which were provided by the same content provider or by a different content provider and which comprise a similar content as the post 30. In particular, the similar post retrieval unit could include in the alert message 62 a recital of reaction posts that were submitted by other users and that had a high impact on the subsequent posts in those previous discussions.

After reviewing the content of the post 30, the user 60 may send a reaction message 64, which is received by the message receiving unit 54. The reaction message 64 may comprise the text of an intended reaction post 31 to be posted on the content provider 10. In other embodiments, the reaction message 64 may comprise instructions for the system. For example, it may include an instruction that the post 30 should be reviewed by a supervisor. It might also include an instruction that the user believes that the post 30 is not relevant and that no response is necessary. In this case, the user's reaction message would indicate that the system has pointed him to a post that is actually not relevant to his interests. This information could be used by a machine learning algorithm of the determining unit 24 to update one of the plurality of rules for determining matching posts. In other words, feedback from other users 60 could be used to update the rules which are used to determine relevant posts.

Similarly, the instruction could be used by a machine learning algorithm of the assigning unit 26. In this case, the assigning unit 26 could store information in the database 29 that this user 60 does not want to be notified of posts with a similar content. Similarity could be determined by the presence of the same keywords.

Once the message receiving unit 54 has received a reaction message 64 from the user, the processing unit 56 can perform processing of the reaction message 64. For example, this processing might comprise a simple removal of header information from an e-mail reaction message 64. In the embodiment of Fig. 1, the content of the reaction message 64 is submitted as a reaction post 31 via the API 12 of the content provider 10.

The monitoring unit 40, which is provided on the first server 80, monitors the content provider 10 for new posts 32 that may have been submitted in response to the reaction post 31 submitted by the second server 82. Although not shown in Fig. 1, the monitoring unit 40 may trigger the remote control unit 45 to trigger the message sending unit 52 to notify the user 60 that a new post 32 has been submitted to the discussion that he previously engaged in.

The quality measuring unit 42 uses pre-defined criteria to measure the quality of the reaction post 31. The quality of the reaction post 31 could be measured for example by measuring the impact that the reaction post 31 has to the discussion. For example, if the reaction post 31 comprises a keyword that was not mentioned in the previous posts 30, but that is repeated in the new posts 32, it can be inferred that the post 31 had an impact on the users who submitted the new posts 32. The quality of the reaction post 31 could further be measured by measuring the suitability of the reaction post 31. For example, the presence of certain keywords which indicate disagreement in the new posts 32 could indicate that the reaction post 31 had an impact, but was considered by the other users as being unsuitable or even offensive.

The quality of the reaction message 64 can be determined by the quality measuring unit 42 as a score that is a linear combination of the impact and suitability scores as outlined above.

Fig. 2 is a schematic view of an embodiment of a system according to the present invention. A first server 80 requests information about posts 30 from a plurality of content providers 10. Similar to the embodiment shown in Fig. 1, the first server 80 sends control messages to the second server 82, which sends alert messages 62 to user 60. The user 60 responds with a reaction message 64. In the embodiment shown in Fig. 2, the reaction messages are processed on the second server 82 and then forwarded to a supervisor user 66.

In this embodiment, the reaction messages 64 of the user 60 are not submitted by the system to the content provider 10. Instead, they are forwarded to the supervisor user 66, who then decides whether to submit a full response to the content provider 10 or whether to take other action. For example, the first server 80 might comprise a determining unit which determines posts that are related to a brand name of the company of the supervisor user 66. In this case, the user 60 could confirm whether the post 30 comprises a non-authorised, infringing use of the brand name. After the supervisor user 66 has been notified by a forwarded reaction message of an infringing post, he can confirm the content of the post by accessing the post from the content provider 10 and possibly request removal of the post from the content provider 10.

In this embodiment, the second server 82 acts as a gateway between user 60 and supervisor user 66. The system can be set up such that the identity of the supervisor user 66 is hidden from the user 60 and vice versa.

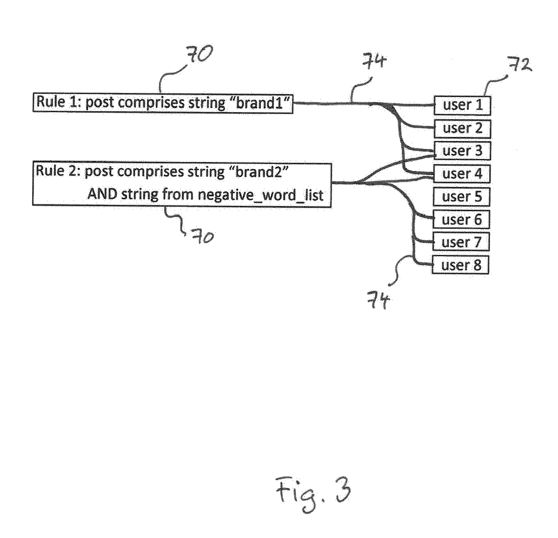

Fig. 3 shows a schematic visualisation of rules 70, user IDs 72 and an association 74 between rules and user IDs. The rules 70 may be represented as a condition in a programming language such as SQL. The association 74 between rules 70 and user IDs 72 can be a "one to many" association such that several users correspond to one rule. As shown in Fig. 3, a given user can be associated with more than one rule.

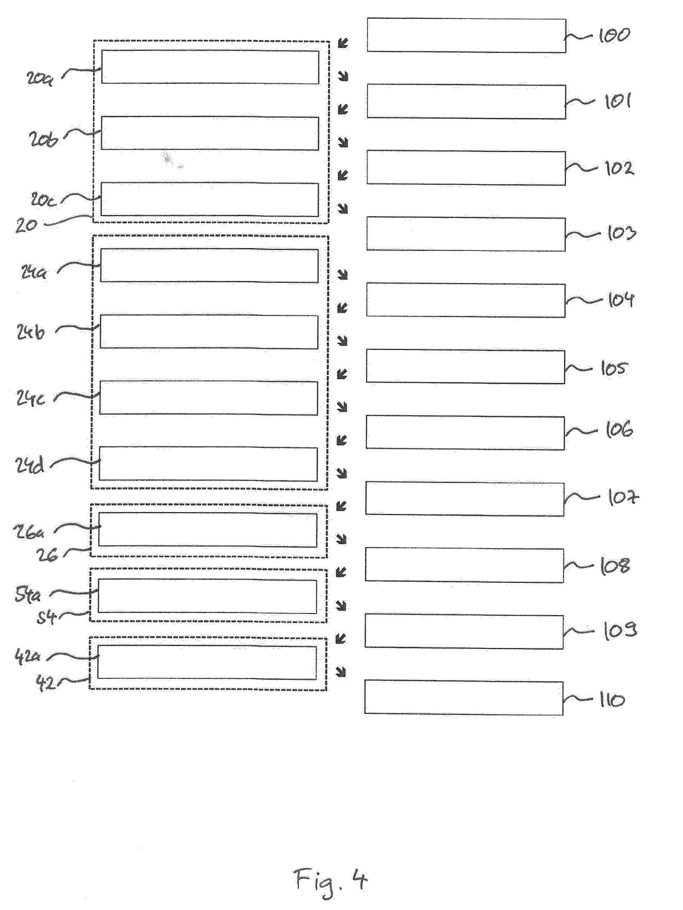

The user IDs 72 can be any kind of identifier that corresponds to a user 60. For example, it could be a unique ID such as an integer number. Alternatively, it could be a unique user name. As was outlined above, the database 29 may comprise further information about the users, for example one or more addresses corresponding to a user and a plurality of information related to previous reaction messages from this user and measured qualities of those reaction messages. Fig. 4 is an illustration of an example embodiment of a system according to the present invention which is specifically targeted at obtaining posts from social media content providers, wherein the posts are grouped together as threads, i.e. a linear sequence of posts related to the same topic. Fig. 4 is a simplified illustration, for example the main processing steps are indicated with only top-to-down arrows, where of course there are also feed-back components (e.g. from the evaluation and monitoring unit to the assigning unit), which are not shown in this illustration.

In the embodiment shown in Fig. 4, the post obtaining unit 20 comprises a social media content provider scanner 20, a social media thread Snapshotter 20b and a snapshot parser 20c. The determining unit 24 comprises a thread and posts analyser 24a, a Feature Extractor 24b, a thread tagger 24c and a thread sorter 24d. The assigning unit 26 comprises a thread assigner 26a. The message sending unit 54 comprises a thread and rule presenter 54a. The quality measuring unit 42 comprises an action evaluator 42a. The database of 29 is adapted to store the information 100-110.

A Social Media content provider locations dataset 100 stores locations and access information for social media query channels that should be monitored for posts 30 along with the refresh intervals that should be used for these social media content providers. Various social media content provider locations are configured for processing. These can include BBS, microblog, SNS, video sites, news sites, e-commerce sites, review sites, ...

The Social Media Channel Scanner 20a can be implemented on a cluster of servers connected to the Internet. The Scanner 20a monitors a list of social media content providers to detect new or updated social media conversations (threads). This happens either by querying channels according to a schedule (see below) or by listening on a communication interface to receive data from a social media site configured to "push" new data.

The refresh interval of channel monitoring is dynamically configured such that channels with a high volume of new threads are queried more frequently. Channels which yield a higher proportion of relevant social media (as determined by subsequent stages in the process) are also queried more frequently. The refresh frequency is automatically determined using a formula that can be configured for each channel.

A Social Media Thread Locations dataset 101 stores the URIs for social media threads being tracked.

The Social Media Thread Snapshotter 20b is implemented on a cluster of servers connected to the Internet and takes snapshots of social media threads, thus tracking any changes in the conversation (such as existing posts being changed or new comments being added). It takes a snapshot social media thread (following multiple pages if necessary) and stores it on the database 29.

Each social media thread is in one of the following states: (1) "new", (2) "active", (3) "stale" and (4) "no longer available". This information can be stored e.g. as part of a Social Media Thread Snapshots dataset 102 and the Thread and Posts dataset 103.

New threads are captured by a dedicated cluster to minimize delays. Active channels if social media content providers are captured at intervals determined by how active they are and how likely they are to become relevant, e.g. to a brand for which comments on the web should be monitored.

After a relevant post is identified on a social media thread, this thread will be polled at shorter intervals in order to detect follow-up comments. The interval increases if the social media thread has not changed since the last snapshot and decreases if it has changed. If the thread remains unchanging for an extended period of time, it is turned into the state "stale", if the thread is no longer available on the internet in turns into the state "no longer available".

The Social Media Thread Snapshots dataset 102 stores multiple snapshots of threads as they evolve over time, taking into account pagination if the thread has been retrieved e.g. via http.

The Snapshot Parser 20c can be implemented as a cluster of servers connected to the snapshot database. This component extracts individual social media posts and related content from new Snapshots including annotation data such as any hashtags or other tags on the site, depending on the channel (including product and pricing information in the case of an ecommerce site, heading and publication date in the case of a news site, video data in the case of a video site, etc.) the timestamp of the post, number of views and comments (if available), etc. and stores this in a separate location on the database 29.

The Threads and Posts dataset 103 stores individual posts including annotations.

The Thread and Post Analyser 24a can be implemented as a cluster of servers connected to the Posts Database and analyses this data in preparation for the subsequent stages of the process. Different analysis algorithms are plugged in and executed in parallel in along with their own sets of configuration data such as the following:
(a) Identity unification, by resolving the IDs of a poster on different social media content providers that can be matched with the actual identity of the poster through prior information on a unification database.
(b) Sentiment estimation according to various dimensions using any number of third-party semantic analysis tools
(c) Any other automated annotation that will improve the performance of the machine learning algorithms down-stream in the process

A Semantic Annotations and Metadata dataset 104 stores semantic analysis and annotations as well as domain specific data (e.g. a price)

The Feature Extractor 24b can be implemented as a cluster of servers connected to the posts (including annotations and Metadata 104) database and executes an algorithm for each newly acquire social media post which estimates whether the post is relevant for any of the plurality of rules 70. If a threshold is exceeded the post is determined to match this rule and added to a job queue for the next processing step. Posts can be assigned to multiple rules or to the highest matching rule only. The matching can be fully automatic or involve a manual verification step.

The Thread Features dataset 105 stores semantic analysis and annotations as well as domain specific data (e.g. the price of a product that is being discussed in the conversation thread).

The Thread Tagger 24c can be implemented as a cluster of servers connected to the posts (including the Annotations and Tags dataset 104) database and executes an algorithm for each newly acquire social media post which estimates whether the post is relevant for any of the rules 70 on the rules database. If a threshold is exceeded, the post is assigned to this rule and added to a job queue for the next processing step. Posts can be assigned to multiple rules or to the highest matching rule only. The matching can be fully automatic or involve a manual verification step.

Relevancy is detected according to context and content of the post using a supervised machine learning algorithm that matches patterns from the text based on key-word matching and assigning a (positive or negative) pre-determined score to various keywords and a Bayesian classifier looking at the previously extracted features, including tokens consisting of words and phrases. The algorithm parameters are updated using validated training data, e.g. using manually labelled training data.

The Threads Tagged dataset 106 stores semantic analysis and annotations as well as domain specific data (e.g. a price of a product).

The Thread Sorter 24d sorts threads into folders according to the presence or absence of tags and keywords and according to other rules. In some embodiments, the thread sorting can be based on assigning a relevancy score to new or evolving conversation threads with respect to the pre-configured rules for which the content provider is being monitored, based on extracted features using a machine learning algorithm that is trained by manually classified training data through a manual back-end validation workflow. The sorting can also take into account a prediction that is made using a machine learning algorithm based on historic data on whether a given conversation thread is likely to attract a large number of views and comments.

A Threads Sorted dataset 107 stores associations between threads and folders. Folders can be configured to trigger actions.

The Thread Assigner 26a can be implemented on a cluster of servers and matches relevant posts it receives from the previous stage with suitable users according to the rule requirements. For each post relevant to a particular rule, a ranking of appropriate users from a database of previously signed up users 60 who have been assigned to this particular rule 70 is calculated using an algorithm. This list is passed on to the next processing step through a job queue.

The Thread Assigner 26a can assign threads that match a particular rule to one or more users from within a group of users that have previously been enrolled to participate in this mission based on a ranking of users using a predictive machine learning system. This can take into account the expected action success metrics of the potential users from the group of users enrolled for this rule, based on previous social media and/or profile survey data including views, purchase history, etc. and including other data (previous social media, online status, profile data, click rates, etc.) to predict the likelihood of user taking an action at all, and predicting the success metrics of such action.

An algorithm estimates a score for each user assigned to a particular rule based on various factors such as the following: (1) the last time that this user was engaged by the system, (2) how highly scored were previous contribution of this user, (3) what is the reputation of this user on the social media platform to be engaged with, (4) whether the survey data is in line with demographic and psychographic requirements of this rule, (5) how other social media written by this person has previously been scored (social media footprint), etc. The scoring process takes all the above and additional factors into account and provides points or removes points on a per-user basis depending on pre-determined weighting of different factors.

The database can comprise a list of rules, e.g. for different brands with corresponding triggers (context and content) to detect relevant posts by and a description of the type of intended reaction message that should be submitted as a reaction post, including a list of users who are assigned to participate in this rule and their training status.

Rules can be created and managed for different purposes. Rules may comprise a description of what trigger the detection system to identify a relevant conversation according to the context and the content (keywords) as well as a description of the reaction message to be pushed out by the users and a description of the kind of people who are likely to be suitable users (survey data and previous digital media footprint).

The Thread and Rule Presenter 54a can be implemented on a cluster of servers connected to various messaging system services and databases. Once a relevant post is detected and matched with suitable users, these users are contacted by automated conversation engines (Chat Bot AI), in the order they are ranked by. They receive the URL to the post they are matched with from the Chat Bot and once a pre-determined number of users have engaged with the bot (depending on the rule requirements typically around 2-10) this step ends.

The Thread and Rule Presenter 54a can present the selected users with such social media and information about the mission either actively, through an instant message alert (Skype, msn, qq, etc.) based on the preferences configured by the consumers and based on the relevancy of the social media to the customer or passively, through the presentation on a community website or application, on a computer or mobile device in textual or iconic form with gamification elements.

It can further be facilitated that such users contribute to the social media through various systems depending on their preferences and the technical options to integrate with that social media channel such as allowing a direct inline response (in case the user is using the user interface) to microblog, sns, and bbs channels for which the users have provided access credentials or by presenting a shortened URL (in case the alert message is sent to an instant messaging client) of which the click rates are tracked and which forwards to the original site of the social media content provider. A third case is sending an URL to the user interface application through the instant messaging client where invoking the URL takes the user directly to the relevant post with further information including relating posts and without requirement to login.

The Thread and Rule Presenter 54 may further incorporate a bot that has an automated conversation with the participant based on historic and training data which may be aided by a human operator if the AI bot is uncertain how to continue the conversation. In other words, the bot may signal an alert to a human supervisor in cases where the bot cannot continue the conversation independently.

Various chat bot conversation engines (available off-the-shelf open source or on commercial licences, e.g. A.L.I.C.E or other systems implementing Artificial Intelligence Markup Language AIML) are used to power the engagement and different users can be engaged using different chat bot engines. The conversation is monitored by automated keyword tracking and if a pre-determined stage is reached, human operators are alerted to take over.

Staff can be alerted to take over conversations that require human input for example to explain rules or for providing a score or reward points to the users if this is required by the rule. This can be based on the quality of the reaction message.

Rules can comprise instructions that should be carried out in an automated way, e.g. sending an email or an SMS.

The Social Media Responses and Rule Fulfillment dataset comprises artificial intelligence and/or machine learning data represented e.g. by AIML and a history of previous conversations

The Action Evaluator 42a performs a quality measuring of the new posts that are posted in response to the reaction post that has been posted based on the reaction message of the user.

The Action Evaluator 42a can capture the actual action and responses to such active or passive presentations of social media are picked up and are scored through a machine-learning algorithm, and optionally validated by a manual process, which then feeds into the subsequent matching iterations as training data.

The result is stored as an Action Scored dataset 110.

### Reference Numbers:

- 10: social media content provider
- 12: API
- 20: post obtaining unit
- 20a: Social Media Channel Scanner
- 20b: Snapshotter
- 20c: snapshot parser
- 24: determining unit
- 24a: thread and posts analyser
- 24b: Feature Extractor
- 24c: thread tagger
- 24d: thread sorter
- 26: assigning unit
- 26a: Thread Assigner
- 28: storing unit
- 29: database
- 30: post
- 31: reaction post
- 32: new post
- 40: monitoring unit
- 42: measuring unit
- 42a: Action Evaluator
- 45: remote control unit
- 50: authorisation request unit
- 52: message sending unit
- 54: message receiving unit
- 54a: thread and rule presenter
- 56: processing unit
- 60: user
- 62: alert message
- 64: reaction message
- 66: supervisor user
- 70: rule
- 72: user ID
- 74: association
- 80: first server
- 82: second server
- 100: Social Media content provider locations dataset
- 101: Social Media Thread Locations dataset
- 102: Social Media Thread Snapshots dataset
- 103: Thread and Posts dataset
- 104: Semantic Annotations and Metadata dataset
- 105: Thread Features dataset
- 106: Threads Tagged dataset
- 107: Threads Sorted dataset
- 110: Action Scored dataset

## Claims

1. Method for sending an alert message (62) to a user (60) concerning a post (30) provided by a content provider (10), in particular a social media content provider, comprising:
(i) storing a plurality of rules (70), a plurality of user IDs (72) and an association (74) between user IDs and rules in a database (29),
(ii) a post obtaining unit (20) obtaining at least one post (30) from the content provider (10),
(iii) a determining unit (24) determining at least one matching rule (70) from the plurality of rules, the matching rule matching the post (30),
(iv) an assigning unit (26) determining at least one target user ID (72) from those user IDs that are associated with the matching rule (70),
(v) a message sending unit (52) sending the alert message (62) comprising information about the post (30) to an address associated with the target user ID,
(vi) a message receiving unit (54) waiting for a reaction message (64) associated with the alert message (62), and
(vii) a processing unit (56) processing and/or forwarding the reaction message (64).

2. The method of claim 1, wherein steps (i) to (v) are carried out repeatedly, in particular in intervals of less than 10 minutes, preferably in intervals which depend on a view frequency of the content provider (10) or an update frequency of the content provider (10), in particular in intervals which depend on a channel view frequency of a content channel of the content provider (10) or a channel update frequency of a channel of the content provider (10).

3. The method of one of the previous claims, wherein the alert messages are sent to a web browser of the user.

4. The method of one of the previous claims, wherein processing and/or forwarding the reaction message (64) comprises submitting a reaction post (31) with the content of the reaction message (64) to the content provider (10), in particular after an authentication procedure using authentication information that are stored in the database (29) associated with the user ID (72).

5. The method of one of the previous claims, further comprising a step of a monitoring unit (40) monitoring the content provider (10) for new posts (32) associated with the post (30) and a step of a measuring unit (42) measuring the quality of the reaction message (64), in particular using a measure that is based on new posts (32), preferably based on new posts that have been submitted in response to the reaction post (31).

6. The method of claim 5, wherein the step (iv) is based on a machine learning algorithm which is trained with measured qualities of previous reaction messages (64) associated with the target user ID (72).

7. System for sending a message (62) to a user (60) concerning a post (30) provided by a content provider (10), in particular a social media content provider, comprising:
- a database (29) for storing a plurality of rules (70), a plurality of user IDs (72) and an association (74) between user IDs and rules,
- a post obtaining unit (20) for requesting a post (30) from the content provider (10),
- a determining unit (24) for determining whether the post (30) matches one of the plurality of rules,
- an assigning unit (26) for determining a target user ID (72) from those user IDs that are associated with the matching rule,
- a message sending unit (52) for sending an alert message (62) concerning the post (30) to an address associated with the target user ID,
- a message receiving unit (54) for receiving a reaction message (64) corresponding to the alert message (62),
- a processing unit (56) for processing and/or forwarding the reaction message (64).

8. The system of one of claim 7, wherein the processing unit (56) comprises an operator interface which is adapted to display the reaction message (64) to a human operator and which is adapted to allow the human operator to discard and/or modify the reaction message.

9. The system of claim 7 or 8, wherein the database (29), the post obtaining unit (20), the determining unit (24) and the assigning unit (26) are provided on a first server (80), and the message sending unit (52), the message receiving unit (54) and the processing unit (56) are provided on a second server (82); wherein the first server (80) further comprises a remote control unit (45) adapted to control the message sending unit (52), the message receiving unit (54) and the processing unit (56) of the second server (82).

10. The system of claim 9, wherein the second server (82) further comprises an authorization request unit (50) for requesting authorization from a user (60) before sending the alert message (62) to the user.

11. The system of one of claim 7 to 10, wherein the system further comprises a user interface (61) which is adapted to display information to the user, receive input from the user, receive the alert message (62) and to send the reaction message (64) and wherein the message sending unit (52) sends the alert message (62) to an address associated with the user ID and the user interface.

12. The system of claim 11, wherein the user interface is a browser plugin (61) that is operable within a browser of a computer of the user (60).

13. Computer program comprising program code means for causing a computer to carry out the steps of the method of one of the claims 1 to 6 when said computer program is carried out on the computer.

14. Computer readable storage medium comprising instructions that, when executed, cause a computer to carry out the steps of the method of one of the claims 1 to 6.
